# EUROPÄISCHE PATENTSCHRIFT

(11) **EP 0 425 470 B1**
(45) Veröffentlichungstag und Bekanntmachung des Hinweises auf die Patenterteilung: **14.05.1997**
(21) Anmeldenummer: 90890273.7
(22) Anmeldetag: 09.10.1990
(51) Int. Cl.: H04J 14/08, H04J 3/06

(54) **Verfahren zum Übertragen von Binärinformationen in einem optischen Übertragungsnetzwerk sowie optisches Übertragungsnetzwerk**
Method for transmitting binary information in an optical transmission network and optical transmission network
Réseau de transmission optique et méthode de transmission d'information binaire dans un réseau de transmission optique

(30) Priorität: 24.10.1989 AT 2446/89
(43) Veröffentlichungstag der Anmeldung: 02.05.1991
(73) Patentinhaber: Alcatel Austria Aktiengesellschaft, A-1210 Wien (AT)
(72) Erfinder: Kneidinger, Max, Dr. Dipl-Ing., A-1150 Wien (AT); Strasser, Helmut Dipl.-Ing., A-1180 Wien (AT); Wolfgang, Johann, A-1210 Wien (AT)
(74) Vertreter: Pohl, Herbert, Dipl.-Ing.

(56) Entgegenhaltungen:
- WO-A-88/09093
- WO-A-89/05078
- PATENT ABSTRACTS OF JAPAN vol. 11, no. 11 (E-470)13. Januar 1987 & JP-A-61 184 949
- PATENT ABSTRACTS OF JAPAN vol. 11, no. 198 (E-519)25. Juni 1987 & JP-A-62 024 799
- PATENT ABSTRACTS OF JAPAN vol. 10, no. 75 (E-390)25. März 1986 & JP-A-60 220 641
- PATENT ABSTRACTS OF JAPAN vol. 11, no. 325 (E-551)22. Oktober 1987 & JP-A-62 112 443

## Beschreibung

Die Erfindung bezieht sich auf ein Verfahren zum Übertragen von Binärinformationen in aufeinanderfolgenden Zeitschlitzen eines Zeitmultiplex-Rahmenformates in einem optischen Übertragungsnetzwerk mit einer Anzahl von Endstellen und einer Zentralstelle, an die wenigstens ein Lichtwellenleiter angeschlossen ist, von welchem ausgehend über wenigstens einen Strahlenteiler und weitere Lichtwellenleiter in einer baumartigen Struktur Verbindungen zu Anschlüssen für die Endstellen vorgesehen sind, wobei jeder Endstelle eine Adresse zugewiesen wird, eine Synchronisierung für den Sendebetrieb der phasenstarr mit der Zentralstelle verkoppelten Endstelle in Abhängigkeit von der Signallaufzeit zwischen Endstelle und Zentralstelle vorgenommen wird und der Sendepegel der Endstelle in Abhängigkeit von der Streckendämpfung zwischen Endstelle und Zentralstelle eingestellt wird, und wobei das Rahmenformat eine Anzahl von Zeitschlitzen für leitungsvermittelte Informationen sowie eine Anzahl von Bit für Steuerungs- und Synchronisierungszwecke aufweist, sowie auf ein optisches Übertragungsnetzwerk, mit welchem ein derartiges Verfahren durchführbar ist.

Optische Übertragungsnetzwerke sind beispielsweise in der EP-A-0 318 331 beschrieben. Es ist bekannt in derartigen optischen Übertragungsnetzwerken Strahlenteiler einzusetzen um eine baumförmige Struktur zu erzielen und auf diese Weise sicherzustellen, daß jeder angeschlossene Teilnehmer des Netzwerkes über die Zentrale eine Kommunikation aufnehmen kann bzw. von der Zentrale in eine Kommunikation eingebunden werden kann. Eine derartige baumartige Struktur legt die Übertragungszeit, welche für den Weg zwischen Teilnehmer und Zentrale benötigt wird, eindeutig fest und dies ist für die Synchronisierung der Übertragung von wesentlicher Voraussetzung. Strahlenteiler bzw. optische Weichen stellen in einem derartigen Netzwerk in beide Übertragungsrichtungen ein Dämpfungsglied dar, so daß der jeweils über den Übertragungsweg ankommende Pegel von der Länge der Strecke und der Anzahl der Strahlenteiler abhängig ist. Die Übertragung in derartigen optischen Übertragungsnetzwerken erfolgt üblicherweise zeitmultiplex in für die Übertragung vorgesehenen Zeitschlitzen, wobei jeder Endstelle organisatorisch üblicherweise ein Zeitschlitz zur Verfügung gestellt wird, innerhalb welchem die Kommunikation zwischen der Endstelle und der Zentrale erfolgen kann. Darüberhinaus ist die Organisation der Übertragung üblicherweise so getroffen, daß neben den entsprechenden Zeitschlitzen innerhalb des Zeitmultiplexrahmenformates eine Anzahl von Bit für paketorientierte Kommunikation sowie eine Anzahl von Bit für interne Steuerungs- und Synchronisierungszwecke vorgesehen sind. Der Paketteil des Rahmens wird hiebei üblicherweise durch ein Kommando der Hauptstelle bzw. Zentrale ausgelöst. Das Glasfasernetzwerk ist hiebei als passives Netzwerk aufgebaut und im Übertragungsweg sind außer den Glasfasern und den passiven Strahlenteilern keine weiteren den Übertragungsweg modifizierenden Einrichtungen vorgesehen.

Um jeder Endstelle ein entsprechendes Zeitfenster im Zeitmultiplexrahmenformat zuzuweisen ist üblicherweise eine Anschalte- und Konfigurationsprozedur auszuführen um alle jeweils aktiven Endstellen in das Übertragungsnetzwerk einbeziehen zu können. Bei dem aus der EP-A-0 318 331 bekannten optischen Übertragungsnetzwerk wird eine derartige Anschalte- und Konfigurationsprozedur zentral ausgelöst und es werden für jede neu zu installierende Endstelle je nach Distanz zur Endstelle ein oder zwei Rahmen für Signallaufzeitmeßzwecke verwendet. Für die jeweils erforderlichen Einstellungen der Endstelle weist jeder Rahmen einen als "house keeping"-Kanal bezeichneten ersten Abschnitt auf. Jede aktive Endstelle muß in der Folge über eine Adresse verfügen, unter der sie von der Zentrale direkt und unverwechselbar angesprochen werden kann, und es muß ihr ein Zeitschlitz zugeordnet werden, auf dem sie in jedem Rahmen ihre leitungsvermittelten Informationen senden und empfangen kann. Adresse und Zeitschlitznummer können hiebei zweckmäßigerweise identisch sein.

Eine aktive, d.h. in das Netzwerk eingebundene Endstelle muß die Signallaufzeit zwischen der Endstelle und der Zentrale kennen. Die sich aus der Signallaufzeit ergebende Verzögerungszeit ergibt diejenige Zeit, die zwischen Beginn des von der Zentrale kommenden empfangenen Rahmens und dem Beginn des eigenen Sendens verstreichen muß, damit sich das eigene Sendesignal im richtigen Zeitschlitz des Rahmens einfügen kann.

Signale können naturgemäß nur dann empfangen werden, wenn die Streckendämpfung eine Erkennbarkeit des Signales noch zuläßt. Es ist daher bei umfangreichen optischen Netzwerken erforderlich den Sendepegel einer Endstelle an die jeweils vorhandene Streckendämpfung in einer Weise anzupassen, daß Signale tatsächlich eindeutig identifiziert und verarbeitet werden können. Mit Vorteil soll der Sendepegel, wie er von der Zentrale empfangen wird, für alle Endstellen im wesentlichen gleich sein, um die Zuverlässigkeit der Signalverständlichkeit im gesamten Netzwerk sicherzustellen.

Bei der bekannten Ausbildung des optischen Übertragungsnetzwerkes wird die Anschalte- und Konfigurationsprozedur von der Zentralstelle aus vorgenommen. Dies bedeutet mit anderen Worten, daß die Zentralstelle in regelmäßigen Abständen im gesamten Netzwerk die Möglichkeit des Anschlusses einer weiteren Endstelle überprüfen muß, wodurch der zentrale Meßvorgang und die Mitteilung der von den Endstellen einzustellenden Werte über den "house keeping"-Kanal wesentlich häufiger vorgenommen werden muß als neue Endstellen angeschlossen werden sollen. Sofern eine derartige Teilblockade der Zentralstelle für überflüssige Abfragen bzw. Mitteilungen über den "house keeping"-Kanal vermieden werden soll, könnte lediglich so vorgegangen werden, daß der Anschluß neuer Endstellen nur zu bestimmten Zeiten möglich ist, wobei die bekannte Konfiguration auf den "house keeping"-Kanal nicht verzichten kann. Insbesondere in größeren Netzwerken ist ein Anschließen von Nebenstellen zu beliebigen Zeitpunkten nicht ohne weiteres möglich. wenn nicht manuell in die Übertragungsprozedur eingegriffen werden soll. Hinzu kommt, daß eine Endstelle bei ihrer Anschaltung auf Grund einer von der Zentralstelle aus vorgenommenen Anschalte- und Konfigurationsprozedur über eine vorgegebene Adresse verfügen muß, welche hardwaremäßig der jeweiligen Endstelle mitgegeben wird. Diese vorgegebene Adresse muß daher zuvor der Zentrale mitgeteilt werden, da sonst bei der herkömmlichen Prozedur eine Anschalte- und Konfigurationsprozedur mißlingt. Diese vorgegebenen Adressen dürfen von den Herstellern von Endstellen keinesfalls mehrfach vergeben werden. so daß sich ein hoher administrativer Aufwand für die Verwaltung und Vergabe der zulässigen Adressen durch die Hersteller und in der Regel aus Sicherheitsgründen eine relativ lange Adresse ergibt. Es müssen somit vorgegebene Adressen der Zentrale zur Verfügung gestellt werden, um nach einem derartigen manuellen Eingriff eine Anschalte- und Konfigurationsprozedur auszulösen.

In WO 89/05078 ist ein optisches Übertragungsnetzwerk beschrieben, bei dem eine Zentrale mittels Strahlenteiler in einer baumförmigen Struktur mit mehreren Endstellen verbunden ist. Die Übertragung von der Zentrale zu den Endstellen erfolgt im Zeitmultiplexverfahren. Alle Endstellen synchronisieren sich auf einen von der Zentrale ausgesendeten Takt und senden in vorgegebenen Zeitschlitzen, die von der Zentrale bestimmt werden. Die Anschalte- und Konfigurationsprozedur für neu zu installierende Endstellen wird zentral ausgelöst. Die Zentrale fordert eine neu zu installierende Endstelle mehrmals nacheinander auf, einen Impuls zu senden, um die Signallaufzeit und daraus die Verzögerungszeit zu bestimmen.

Die Erfindung zielt nun darauf ab, Endstellen zu beliebigen Zeitpunkten in ein optisches Übertragungsnetzwerk einzubeziehen, ohne daß hiefür die Kenntnis einer vorgegebenen Geräteadresse erforderlich ist. Weiters zielt die Erfindung darauf ab, die Installation zu vereinfachen und die jeweils günstigsten Kommunikationsbedingungen selbsttätig aufrechtzuerhalten.

Zur Lösung dieser Aufgabe besteht das erfindungsgemäße Verfahren im wesentlichen darin, daß das Rahmenformat außerdem eine Anzahl von Bits für paketorientierte Kommunikation umfaßt und dieser Paketteil des Rahmens durch ein von der Zentralstelle an alle aktiven Endstellen ausgesandtes Kommando zum Abwickeln einer von einer neu zugeschalteten Endstelle ausgelösten und kontrollierten Anschalte- und Konfigurationsprozedur für neu zu installierende Endstellen freigemacht wird (Meßfenster) und daß von einer neu angeschalteten Endstelle, die noch nicht aktiv ist und der noch keine Adresse und kein Zeitschlitz zugewiesen ist, im Meßfenster ein aus einer vorbestimmten Anzahl von Bits bestehendes Stationskennwort als Zufallswert erzeugt und an die Zentralstelle ausgesendet wird, welche das empfangene Bitmuster an die Endstellen zurücksendet, wobei in der neu angeschalteten Endstelle das empfangene Bitmuster mit dem Bitmuster des ausgesendeten Stationskennwortes verglichen wird.

Dadurch, daß die im Rahmenformat enthaltene Anzahl von Bits für paketorientierte Kommunikation als Meßfenster freigemacht wird, wird die Möglichkeit geschaffen, die Anschalte- und Konfigurationsprozedur von der jeweils neu zugeschalteten Endstelle aus vorzunehmen, und es ist bei einer derartigen, von der Endstelle aus vorgenommenen Anschalte- und Konfigurationsprozedur nicht mehr erforderlich, der Zentralstelle vor Beginn der Anschalteprozedur eine Adresse mitzuteilen. Die Adresse wird vielmehr während der Anschalte- und Konfigurationsprozedur zwischen Endstelle und Zentrale vereinbart und es wird im Zuge der Anschalte- und Konfigurationsprozedur ein Zeitschlitz des Zeitmultiplexrahmenformates als wesentliches Kennzeichen für die jeweils neue Endstelle vereinbart, wobei der jeweilige Zeitschlitz die Adresse selbst sein kann oder unabhängig von einer frei gewählten oder zufälligen Adresse für die weitere Übertragung zur Verfügung steht. Eine derartige von der Endstelle aus durchgeführte Anschalte- und Konfigurationsprozedur erlaubt es in größeren Anlagen in einfacher Weise Endstellen von einem physikalischen Ort zu einem anderen zu versetzen, wobei automatisch und ohne händischen Eingriff die erforderlichen Maßnahmen von der Endstelle aus gesteuert werden können.

Im einzelnen muß zunächst eine neu angeschaltete, aber noch nicht aktive Endstelle lediglich erkennen, daß das Meßfenster zur Verfügung steht, worauf die Endstelle ein Stationskennwort aussendet. Das Kennwort kann aus einer Anzahl von Bits bestehen, beispielsweise 16, und als Zufallswert zu Beginn der Prozedur in der Endstelle generiert werden. Ein derartiges Stationskennwort wird bei freigemachtem Meßfenster von der Zentrale empfangen und unverzüglich zurückgesandt. Sofern die Rückübertragung fehlerfrei erfolgte, wird daraus geschlossen, daß offensichtlich nicht gleichzeitig eine weitere Endstelle den Versuch einer Anschalte- und Konfigurationsprozedur unternommen hat und daß weiters der Sendepegel ausreichend war um fehlerfrei von der Zentrale erkannt zu werden.

Wenn die Zentrale das ausgesendete Bitmuster in nicht verständlicher Weise zurücksendet und die Identität nicht festgestellt werden kann, kann dies darauf zurückzuführen sein, daß der gewählte Sendepegel der neu zugeschalteten Endstelle auf Grund des gegebenen Übertragungsweges zu gering ist. In einem solchen Fall wird vorzugsweise so vorgegangen, daß die Aussendung des Stationskennwortes von der neu angeschalteten Endstelle aufeinanderfolgend mit unterschiedlichen Sendepegeln erfolgt, um einen minimalen und gegebenenfalls einen maximalen Sendepegel zu ermitteln, bei dessen Unterschreitung bzw. Überschreitung von der Zentralstelle ein verfälschtes Bitmuster zurückgesendet wird, und daß in der Endstelle für den zukünftigen Sendepegel ein zwischen den ermittelten Extremwerten liegender Wert eingestellt wird. Die gleiche Prozedur kann zyklisch für die Optimierung der Übertragungsbedingungen auch dann angewandt werden, wenn die Erstaufnahme der Kommunikation erfolgreich verlief.

Bei Rücksendung eines verfälschten Bitmusters von der Zentralstelle besteht neben der Möglichkeit, daß der Sendepegel falsch gewählt war, auch die Möglichkeit, daß eine weitere Endstelle gleichzeitig den Versuch der Aufnahme einer Anschalte- und Konfigurationsprozedur unternommen hat. Um derartige Fehler zu vermeiden, wird das erfindungsgemäße Verfahren mit Vorteil so durchgeführt, daß bei Rücksendung eines verfälschten Bitmusters von der Zentralstelle die den Anschaltversuch ausführende(n) Endstelle(n) eine Pause einlegt (einlegen), deren Dauer einen in der Endstelle erzeugten, innerhalb vorgegebener Grenzen liegenden Zufallswert hat und/oder mit der Anzahl der Fehlversuche zunimmt, und daß vorzugsweise nach einer vorbestimmten Anzahl von Fehlversuchen der Sendepegel der Endstelle auf den nächsthöheren Wert erhöht wird. Wenn die Endstelle wieder ihr ursprüngliches Kennwort empfängt, liegt offensichtlich keine Kollision vor und die eingestellte Sendeleistung der Endstelle ist offensichtlich gleichfalls korrekt. Nach einer Optimierung der Sendeleistungseinstellung in der oben genannten Weise, wobei als optimaler Wert beispielsweise das arithmetische Mittel zwischen dem ersten erfolgreichen und dem letzten erfolgreichen Übertragungsversuch bei jeweils unterschiedlichem Sendepegel verwendet werden kann, muß noch die Zeitverzögerung ermittelt werden, die zwischen Aussenden des Kennwortes und Empfangen des von der Zentrale zurückgesandten Kennwortes besteht.

Zu diesem Zwecke wird so vorgegangen, daß in der neu angeschalteten, allein über das Meßfenster verfügenden und mit optimiertem Sendepegel arbeitenden Endstelle aus der Zeitverzögerung zwischen dem Aussenden des Stationskennwortes und dem Empfang des von der Zentralstelle zurückgesendeten Stationskennwortes die Signallaufzeit auf der optischen Übertragungsleitung ermittelt und daraus die erforderliche Einstellung der Zeitverzögerung des eigenen Senders hergeleitet wird. Die sich daraus ergebende erforderliche Einstellung der Zeitverzögerung stellt in der Folge sicher, daß nach erfolgter Synchronisierung mit der Zeitbasis der Zentrale Sendungen der Endstelle immer in den im Zeitmultiplexrahmenformat vorgesehenen Zeitschlitz gelangen.

Zweckmäßig wird zum bleibenden Einbinden einer neu angeschalteten Endstelle in das optische Übertragungssystem das Verfahren so geführt, daß bei Feststellung der Identität des von der Zentralstelle zurückgesendeten Bitmusters mit dem von der neu angeschalteten Endstelle ausgesendeten Bitmuster in der Endstelle diese einen freien Zeitschlitz, vorzugsweise den nächsten freien Zeitschlitz, ermittelt und diesen durch Einspeisen eines anderen Bitmusters, das ihn als zugeordnet ausweist, in Senderichtung zur Zentralstelle belegt. Es kann somit unmittelbar bei Feststellung der Identität des von der Zentrale zurückgesandten Bitmusters mit dem ausgesendeten Bitmuster der neu angeschalteten Endstelle ein freier Zeitschlitz im Rahmenformat zugeordnet werden, wobei vorzugsweise der nächste freie Zeitschlitz des Rahmenformates verwendet wird. Dieser freie Zeitschlitz wird nun durch Einspeisen eines anderen Bitmusters, welches den Belegtzustand signalisiert, in Senderichtung zur Zentralstelle hin belegt.

Um die Möglichkeit einer kontinuierlichen Optimierung der Übertragungsbedingungen innerhalb des gesamten optischen Übertragungsnetzwerkes zu bieten, kann mit Vorteil der als Meßfenster verwendete Paketkanal von der Zentralstelle in regelmäßigen Zeitabständen freigemacht werden. Für die Optimierung kann hiebei eine Aufforderung zur Überprüfung der jeweils dezentral ermittelten Parameter in regelmäßigen Zeitabständen von der Zentralstelle aus ausgelöst werden, wobei die Vorgangsweise mit Vorteil so gewählt wird, daß zum Ermöglichen einer Nachführung der Übertragungsparameter von der Zentralstelle in regelmäßigen Zeitabständen, z.B. jede Stunde, jeweils eine andere Endstelle aufgefordert wird, die Optimierung des Sendepegels und die Ermittlung der Zeitverzögerung neuerlich vorzunehmen, während alle übrigen Endstellen den Paketkanal freizuhalten haben (Einstellfenster).

Nach erfolgter Anschalte- und Konfigurationsprozedur und insbesondere nach Feststellung des geeigneten Sendepegels und Belegen des zugeordneten Zeitschlitzes wird diese Belegung von der Zentralstelle quittiert. Die Belegung des Zeitschlitzes erfolgt, wie bereits oben ausgeführt, durch Ablegen eines Bitmusters, beispielsweise eines dem Zeitschlitz zugeordneten Kontrollbits, das diesen als belegt oder frei ausweisen kann,wobei die Zentralstelle die Belegung registriert und sie durch entsprechende Änderung des Bitmusters in der Senderichtung zur Endstelle quittiert. Mit der Wahl eines bestimmten Zeitschlitzes kann, wie bereits oben erwähnt, in vorteilhafter Weise auch die Stationsadresse festgelegt werden und die Endstelle kann auf den für interne Kommunikation vorgesehenen Kanälen im Zeitmultiplexformat von der Zentralstelle direkt angesprochen werden. Sobald die Zentralstelle erkennt, daß die von der Endstelle ausgelöste Konfigurationsphase abgeschlossen ist, wird der Paketkanal wieder für alle Stationen durch ein entsprechendes Kommando freigegeben, wodurch das Meßfenster geschlossen wird.

Durch die dezentrale Anschalte- und Konfigurationsprozedur wird, wie bereits eingangs erwähnt, die Vergabe einer gerätespezifischen Adresse vor der Anschalteprozedur vermieden, so daß für die Anschalte- und Konfigurationsprozedur keine manuellen Modifikationen erforderlich sind. Die Konfiguration durch die Endstelle, welche dadurch ermöglicht wird, daß von der Zentralstelle lediglich ein Meßfenster freigemacht wird, ermöglicht in der Folge in gleicher Weise die dezentrale Nachführung der Übertragungsparameter, welche gleichfalls automatisch vorgenommen werden kann. Die Übertragungsparameter können auf Grund von langsamen Parameteränderungen, wie beispielsweise Temperaturdrift od.dgl., über längere Zeiträume geringfügige Veränderungen erfahren und die dezentrale Nachführung erlaubt es derartigen möglichen Störungen der Übertragung entgegenzuwirken.

Für die genannte Prozedur ist ein Glasfasernetz mit einer gemeinsamen Sende- und Empfangsfaser ausreichend. Alternativ kann die gewählte Prozedur naturgemäß in Glasfasernetzen angewandt werden, welche aus jeweils einer Sende- und einer Empfangsfaser aufgebaut sind. Bei einer derartigen Ausbildung existieren zwei gleichartige voneinander getrennte Baumstrukturen aus Glasfasern und passiven Richtkopplern, wobei auf einem Netz die Informationen von der Zentralstelle zu den Endstellen und auf dem anderen die Informationen von den Endstellen zu der Zentralstelle übertragen werden. Der wesentliche Vorteil der erfindungsgemäßen Ausgestaltung des Verfahrens besteht aber in erster Linie darin, daß es auch in Netzen, welche einfach ausgeführt sind und nur eine Glasfaser für die Sende- und Empfangsrichtung aufweisen, problemlos angewandt werden kann. Bei einem derartigen Glasfasernetz wird ein Zeitgetrenntlage-Verfahren für die Übertragung angewandt. Es wird ein abgeändertes Rahmenmultiplexformat verwendet, welches in einen die von der Zentrale gesendeten Informationen enthaltenden Teil und einen anderen die von allen Endstellen gesendeten Informationen enthaltenden Teil zerfällt. Die beiden Informationsteile sind bei einer derartigen Einfasernetzstruktur zeitlich durch eine Schutzzeit voneinander getrennt, die hiebei mit Vorteil mindestens der doppelten Signallaufzeit von der Zentrale zu der geographisch am weitesten entfernten Endstelle entspricht.

Das optische Übertragungsnetzwerk zur Durchführung des erfindungsgemäßen Verfahrens weist eine Anzahl von Endstellen und eine Zentralstelle auf, an die wenigstens ein Lichtwellenleiter angeschlossen ist, von welchem ausgehend über wenigstens einen Strahlenteiler und weitere Lichtwellenleiter in einer baumartigen Struktur Verbindungen zu Anschlüssen für die Endstellen vorgesehen sind, wobei jede Stelle mit einem Sender und einem Empfänger für optische Binärsignale ausgestattet ist und der Sendepegel der Endstellen einstellbar ist, und ist im wesentlichen dadurch gekennzeichnet, daß zum Ausführen einer dezentralen Anschalte- und Konfigurationsprozedur jede Endstelle einen Zufallsgenerator zum Erzeugen eines Stationskennwortes, das in einer Konfigurationsphase an die Zentralstelle auszusenden ist, und einen Vergleicher zum Vergleichen des von der Zentralstelle nach Empfang der Aussendung der Endstelle an diese zurückgesendeten Bitmusters des Stationskennwortes mit dem ausgesendeten Stationskennwort sowie eine Logikschaltung enthält, die bei Empfang eines verfälschten Stationskennwortes eine Wiederholung des Versuches bewirkt, und daß in der Endstelle eine Zeitmeßvorrichtung zum Messen der Zeitverzögerung zwischen dem Aussenden des Stationskennwortes und dem Empfang des von der Zentralstelle zurückgesendeten Stationskennwortes und zum Einstellen der Zeitverzögerung des eigenen Senders vorgesehen ist. Durch die Ausstattung der dezentralen Endstellen mit einem Zufallsgenerator wird die Möglichkeit geschaffen, das für die dezentrale Anschalte- und Konfigurationsprozedur erforderliche Stationskennwort zu erstellen, und durch die Möglichkeit, den Vergleich zwischen ausgesandter und von der Zentralstelle zurückgesandter Information durchführen zu können, wird eine derartige Anschalte- und Konfigurationsprozedur ohne weitere der Zentrale bekannte Vorgaben von der Endstelle aus ermöglicht. Schließlich bietet die in der Endstelle vorgesehene Zeitmeßvorrichtung die Möglichkeit, von der Endstelle aus den Sendezeitpunkt so einzustellen, daß der im Zuge der Anschalte- und Konfigurationsprozedur festgelegte Zeitschlitz tatsächlich Verwendung findet.

Mit Vorteil ist das erfindungsgemäße Übertragungsnetzwerk so weitergebildet, daß in der Endstelle eine vorzugsweise einen Zufallsgenerator enthaltende Verzögerungseinrichtung zum Einstellen der zeitlichen Abstände zwischen aufeinanderfolgenden Anschalteversuchen vorgesehen ist, wodurch sichergestellt wird, daß bei fehlerhaften Anschalteversuchen, welche auf gleichzeitige Anschaltung einer Mehrzahl von Endstellen zurückgeführt werden können, auch hier eine fehlerfreie Anschalteprozedur durchgeführt werden kann.

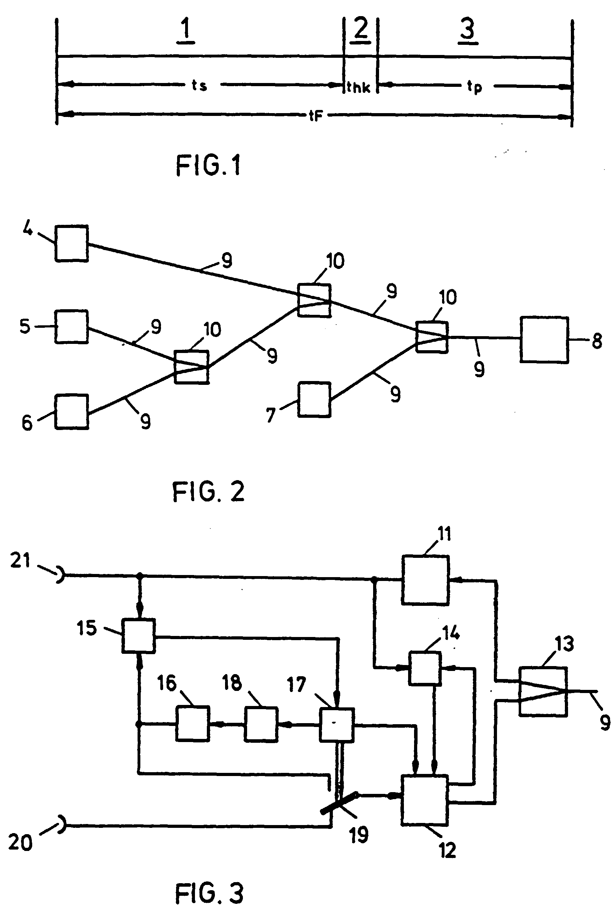

Die Erfindung wird nachfolgend an Hand eines in der Zeichnung schematisch dargestellten Ausführungsbeispieles näher erläutert. Es zeigt: Fig.1 ein für das erfindungsgemäße Übertragungsverfahren geeignetes Zeitmultiplex-Rahmenformat; Fig.2 schematisch ein optisches Übertragungsnetzwerk zur Anwendung des erfindungsgemäßen Verfahrens, und Fig.3 ein Blockschaltbild einer Endstelle für das Übertragungsnetzwerk gemäß Fig.2.

In Fig.1 ist ein Zeitmultiplex-Rahmenformat dargestellt, welches einen den Endstellen eines optischen Übertragungsnetzwerkes zugeordneten, in Zeitschlitze unterteilten ersten Abschnitt 1, einen "house keeping"-Abschnitt 2 und einen Paketabschnitt 3 umfaßt. Diese Abschnitte haben jeweils eine zeitliche Dauer von ts, thk bzw. tp. Die gesamte zeitliche Länge des Rahmens beträgt tF und diese Dauer kann in einem praktischen Fall 125 µs betragen. Der Abschnitt 1 beginnt mit einem Synchronsignalmuster und enthält daran anschließend eine Anzahl von Zeitschlitzen zu beispielsweise je 8 Bit, welche Anzahl der maximalen Anzahl von an eine Zentralstelle anschließbaren Endstellen entspricht. Je nach der Anzahl der tatsächlich angeschlossenen aktiven Endstellen ist eine entsprechende Anzahl von Zeitschlitzen belegt, während die übrigen Zeitschlitze unbenützt bleiben. Zeitschlitze mit einem Umfang von 8 bit können für die Übertragung von Telefongesprächen eingesetzt werden.

Der "house keeping"-Abschnitt 2 dient zum Übertragen von Betriebsdaten und -Parametern.

Der Paketabschnitt 3 dient zur paketweisen Datenübertragung, beispielsweise Text und Graphik.

Wenn für beide Übertragungsrichtungen ein einziger Lichtwellenleiter eingesetzt wird, dann ist ein Überrahmen vorzusehen, der aufeinanderfolgend jeweils einen Rahmen für die Übertragungsrichtung von der Zentralstelle zu den Endstellen und einen Rahmen für die Übertragungsrichtung von den Endstellen zur Zentralstelle umfaßt. Diese beiden Rahmen sind durch eine Schutzzeit voneinander getrennt, die mindestens der doppelten größten Signallaufzeit zwischen einer Endstelle und der Zentralstelle entspricht.

Fig.2 zeigt schematisch ein optisches Übertragungsnetzwerk mit baumartiger Struktur, wobei jeweils ein Lichtwellenleiter für die Signalübertragung in beiden Richtungen eingesetzt ist. Hierbei erfolgt die Nachrichtenübermittlung zwischen Endstellen 4, 5, 6 und 7 einerseits und einer Zentralstelle 8 anderseits über Lichtwellenleiter 9 und Strahlenteiler 10. Für jede Verbindung existiert ein eindeutiger Weg mit konstanter Länge und einer dieser Länge entsprechenden Signallaufzeit. Die Signallaufzeiten zwischen der Zentralstelle und den einzelnen Endstellen sind somit im allgemeinen unterschiedlich und müssen bei der Einbindung einer Endstelle in das optische Übertragungsnetzwerk zum Einhalten des Rahmenformates berücksichtigt werden. Weiters ist bei der Übertragung die Signaldämpfung zu berücksichtigen, die nicht nur von der Leitungslänge, sondern auch von der Anzahl der vom Signal zu durchlaufenden Strahlenteiler abhängt. Hiebei ist zu beachten, daß sich eine Signalabschwächung in den Strahlenteilern nicht nur auf dem Weg von der Zentralstelle zu einer Endstelle, sondern auch auf dem Weg von einer Endstelle zur Zentralstelle ergibt.

Ein Blockschaltbild mit den wesentlichen Baueinheiten einer Endstelle ist in Fig.3 dargestellt. Die Endstelle weist einen Empfänger 11 und einen Sender 12 sowie zur Nachrichtenübertragung über ein Einfaser-Übertragungsnetzwerk einen Strahlenteiler 13 auf. Alternativ zur Verwendung zeitlich aufeinanderfolgender Rahmen für die beiden Übertragungsrichtungen läßt sich auch ein Duplexverkehr mit unterschiedlichen Lichtwellenlängen für die beiden Übertragungsrichtungen über einen einzigen Lichtwellenleiter durchführen, in welchem Falle der Strahlenteiler 13 mit entsprechenden Transmissionsfiltern für die beiden Wellenlängen bzw. Trägerfrequenzen zur Bildung einer Frequenzweiche auszustatten wäre. Für die Berücksichtigung der Signallaufzeit zwischen Endstelle und Zentralstelle ist eine Zeitmeßvorrichtung 14 vorgesehen, die im Sender 12 eine entsprechende Zeitverzögerung gegenüber dem von der Zentralstelle für alle Endstellen bereitgestellten Synchronsignal einstellt, damit Aussendungen der Endstelle richtig in dem der Endstelle zugeordneten Zeitschlitz liegen. Für das richtige Erkennen und die Sicherstellung einer fehlerfreien Kommunikation einer an das optische Übertragungsnetzwerk neu angeschalteten Endstelle ist ein Vergleicher 15 vorgesehen, der die Übereinstimmung einer von der Zentralstelle einlangenden Antwort auf ein von der Endstelle ausgesendetes Stationskennwort überprüft. Ein solches Stationskennwort wird bei Bedarf von einem Zufallsgenerator 16 erzeugt. Der Zufallsgenerator 16 ist von einer Logikschaltung 17 über ein Verzögerungsglied 18 auslösbar. Die Logikschaltung 17 kann außerdem den Sendepegel des Senders 12 beeinflussen und einen Umschalter 19 betätigen, der ein auszusendendes Signal entweder für die Anschalte- und Konfigurationsprozedur vom Zufallsgenerator 16 oder für die normale Informationsübertragung vom Eingang 20 an den Sender 12 leitet. Von der Zentralstelle empfangene Informationen stehen am Ausgang 21 zur Verfügung. Der netzwerkseitige Ausgang und Eingang der Endstelle liegen an einem einzelnen Lichtwellenleiter 9.

Der Paketabschnitt 3 des in Fig.1 dargestellten Rahmens wird von der Zentralstelle periodisch, z.B. alle 10 s, durch ein an alle aktiven Endstellen ausgesandtes Kommando freigemacht und neu zugeschaltete Endstellen werden damit zum Abwickeln einer Anschalte- und Konfigurationsprozedur aufgefordert. Eine neu angeschaltete Endstelle, die noch nicht aktiv ist und der noch keine Adresse und kein Zeitschlitz zugewiesen ist, kann sich in dem nun vorübergehend als Meßfenster fungierenden Paketabschnitt melden. Zu diesem Zweck wird der Umschalter 19 aus der in Fig.3 gezeichneten Stellung in die andere Stellung umgelegt und der Zufallsgenerator 16 erzeugt ein aus einer vorbestimmten Anzahl von Bits bestehendes Stationskennwort, das über den Sender 12 an die Zentralstelle 8 (Fig.2) ausgesendet wird, welche das empfangene Bitmuster an die Endstellen 4, 5, 6, 7 zurücksendet. In der neu angeschalteten Endstelle gelangt dieses Bitmuster vom Lichtwellenleiter 9 über Strahlenteiler 13 an den Empfänger 11, wo das empfangene optische Signal in ein elektrisches Signal umgewandelt wird. Im Vergleicher 15 wird das empfangene Bitmuster mit dem vom Zufallsgenerator 16 erzeugten Bitmuster verglichen und das Ergebnis dieses Vergleiches an die Logikschaltung 17 geführt. Diese entscheidet, ob der Versuch nach einer durch das Verzögerungsglied 18 bedingten Zeitspanne zu wiederholen ist oder nicht. Bei Feststellung der Identität des zurückgesendeten Bitmusters mit dem ausgesendeten Bitmuster ermittelt die neu angeschaltete Endstelle einen freien Zeitschlitz und belegt diesen durch Einspeisen eines anderen Bitmusters, das ihn als zugeordnet ausweist, in Senderichtung zur Zentralstelle.

Zur Optimierung des Sendepegels ist es allerdings zweckmäßig, die Aussendung des Stationskennwortes von der neu angeschalteten Endstelle aufeinanderfolgend mit schrittweise ansteigenden Sendepegeln vorzunehmen, um einen minimalen und gegebenenfalls auch einen maximalen Sendepegel zu ermitteln, bei dessen Unterschreitung bzw. Überschreitung von der Zentralstelle ein verfälschtes Bitmuster zurückgesendet wird. Dann kann in der Endstelle für den in Hinkunft einzuhaltenden Sendepegel ein zwischen den ermittelten Extremwerten liegender Wert unter Vermittlung der Logikschaltung 17 im Sender 12 eingestellt werden.

Die Rücksendung eines verfälschten Bitmusters von der Zentralstelle kann durch einen unpassenden Sendepegel der Endstelle bedingt sein, kann jedoch auch davon herrühren, daß sich zwei oder mehr neu hinzugekommene Endstellen gleichzeitig mit unterschiedlichen Stationskennworten gemeldet haben. Um auch diesen letztgenannten Fall einwandfrei beherrschen zu können, ist es zweckmäßig, wenn die Verzögerungszeit des Verzögerungsgliedes 18 auf einen innerhalb eines vorbestimmten Bereiches liegenden Zufallswert eingestellt wird. Dann besteht eine gute Wahrscheinlichkeit dafür, daß sich die neu hinzugekommenen Endstellen bei Wiederholung ihrer Anschalteversuche nicht wieder gleichzeitig, sondern zu unterschiedlichen Zeitpunkten unter Aussendung ihrer Stationskennworte melden werden, so daß die ordnungsgemäße Aktivierung jeder einzelnen neuen Endstelle vorgenommen werden kann.

## Patentansprüche

1. Verfahren zum Übertragen von Binärinformationen in aufeinanderfolgenden Zeitschlitzen eines Zeitmultiplex-Rahmenformates in einem optischen Übertragungsnetzwerk mit einer Anzahl von Endstellen und einer Zentralstelle, an die wenigstens ein Lichtwellenleiter angeschlossen ist, von welchem ausgehend über wenigstens einen Strahlenteiler und weitere Lichtwellenleiter in einer baumartigen Struktur Verbindungen zu Anschlüssen für die Endstellen vorgesehen sind, wobei jeder Endstelle eine Adresse zugewiesen wird, eine Synchronisierung für den Sendebetrieb der phasenstarr mit der Zentralstelle verkoppelten Endstelle in Abhängigkeit von der Signallaufzeit zwischen Endstelle und Zentralstelle vorgenommen wird und der Sendepegel der Endstelle in Abhängigkeit von der Strekkendämpfung zwischen Endstelle und Zentralstelle eingestellt wird, und wobei das Rahmenformat eine Anzahl von Zeitschlitzen für leitungsvermittelte Informationen sowie eine Anzahl von Bits für Steuerungs- und Synchronisierungszwecke und außerdem eine Anzahl von Bits für paketorientierte Kommunikation aufweist, dadurch gekennzeichnet, daß dieser Paketteil des Rahmens durch ein von der Zentralstelle an alle aktiven Endstellen ausgesandtes Kommando zum Abwickeln einer von einer neu zugeschalteten Endstelle ausgelösten und kontrollierten Anschalte- und Konfigurationsprozedur für neu zu installierende Endstellen freigemacht wird (Meßfenster) und daß von einer neu angeschalteten Endstelle, die noch nicht aktiv ist und der noch keine Adresse und kein Zeitschlitz zugewiesen ist. im Meßfenster ein aus einer vorbestimmten Anzahl von Bits bestehendes Stationskennwort als Zufallswert erzeugt und an die Zentralstelle ausgesendet wird, welche das empfangene Bitmuster an die Endstellen zurücksendet, wobei in der neu angeschalteten Endstelle das empfangene Bitmuster mit dem Bitmuster des ausgesendeten Stationskennwortes verglichen wird.

2. Verfahren nach Anspruch 1, dadurch gekennzeichnet, daß die Aussendung des Stationskennwortes von der neu angeschalteten Endstelle aufeinanderfolgend mit unterschiedlichen Sendepegeln erfolgt, um einen minimalen und gegebenenfalls einen maximalen Sendepegel zu ermitteln, bei dessen Unterschreitung bzw. Überschreitung von der Zentralstelle ein verfälschtes Bitmuster zurückgesendet wird, und daß in der Endstelle für den zukünftigen Sendepegel ein zwischen den ermittelten Extremwerten liegender Wert eingestellt wird.

3. Verfahren nach Anspruch 1 oder 2, dadurch gekennzeichnet, daß bei Rücksendung eines verfälschten Bitmusters von der Zentralstelle die den Anschaltversuch ausführende(n) Endstelle(n) eine Pause einlegt (einlegen), deren Dauer einen in der Endstelle erzeugten, innerhalb vorgegebener Grenzen liegenden Zufallswert hat und/oder mit der Anzahl der Fehlversuche zunimmt, und daß vorzugsweise nach einer vorbestimmten Anzahl von Fehlversuchen der Sendepegel der Endstelle auf den nächsthöheren Wert erhöht wird.

4. Verfahren nach Anspruch 2 oder 3, dadurch gekennzeichnet, daß in der neu angeschalteten, allein über das Meßfenster verfügenden und mit optimiertem Sendepegel arbeitenden Endstelle aus der Zeitverzögerung zwischen dem Aussenden des Stationskennwortes und dem Empfang des von der Zentralstelle zurückgesendeten Stationskennwortes die Signallaufzeit auf der optischen Übertragungsleitung ermittelt und daraus die erforderliche Einstellung der Zeitverzögerung des eigenen Senders hergeleitet wird.

5. Verfahren nach einem der Ansprüche 1 bis 4, dadurch gekennzeichnet, daß bei Feststellung der Identität des von der Zentralstelle zurückgesendeten Bitmusters mit dem von der neu angeschalteten Endstelle ausgesendeten Bitmuster in der Endstelle diese einen freien Zeitschlitz, vorzugsweise den nächsten freien Zeitschlitz, ermittelt und diesen durch Einspeisen eines anderen Bitmusters, das ihn als zugeordnet ausweist, in Senderichtung zur Zentralstelle belegt.

6. Verfahren nach einem der Ansprüche 1 bis 5, dadurch gekennzeichnet, daß zum Ermöglichen eines Konfigurationsverfahrens der Paketkanal von der Zentralstelle in regelmäßigen Zeitabständen, z.B. alle 10 s, freigemacht wird.

7. Verfahren nach einem der Ansprüche 1 bis 6, dadurch gekennzeichnet, daß zum Ermöglichen einer Nachführung der Übertragungsparameter von der Zentralstelle in regelmäßigen Zeitabständen, z.B. jede Stunde, jeweils eine andere Endstelle aufgefordert wird, die Optimierung des Sendepegels und die Ermittlung der Zeitverzögerung neuerlich vorzunehmen, während alle übrigen Endstellen den Paketkanal freizuhalten haben (Einstellfenster).

8. Optisches Übertragungsnetzwerk mit einer Anzahl von Endstellen und einer Zentralstelle, an die wenigstens ein Lichtwellenleiter angeschlossen ist, von welchem ausgehend über wenigstens einen Strahlenteiler und weitere Lichtwellenleiter in einer baumartigen Struktur Verbindungen zu Anschlüssen für die Endstellen vorgesehen sind, wobei jede Stelle mit einem Sender und einem Empfänger für optische Binärsignale ausgestattet ist und der Sendepegel der Endstellen einstellbar ist, dadurch gekennzeichnet, daß zum Ausführen einer dezentralen Anschalte- und Konfigurationsprozedur jede Endstelle (4,5,6,7) einen Zufallsgenerator (16) zum Erzeugen eines Stationskennwortes, das in einer Konfigurationsphase an die Zentralstelle (8) auszusenden ist, und einen Vergleicher (15) zum Vergleichen des von der Zentralstelle (8) nach Empfang der Aussendung der Endstelle (4,5,6,7) an diese zurückgesendeten Bitmusters des Stationskennwortes mit dem ausgesendeten Stationskennwort sowie eine Logikschaltung (17) enthält, die bei Empfang eines verfälschten Stationskennwortes eine Wiederholung des Versuches bewirkt, und daß in der Endstelle (4,5,6,7) eine Zeitmeßvorrichtung (14) zum Messen der Zeitverzögerung zwischen dem Aussenden des Stationskennwortes und dem Empfang des von der Zentralstelle (8) zurückgesendeten Stationskennwortes und zum Einstellen der Zeitverzögerung des eigenen Senders (12) vorgesehen ist.

9. Übertragungsnetzwerk nach Anspruch 8, dadurch gekennzeichnet, daß in der Endstelle (4,5,6,7) eine vorzugsweise einen Zufallsgenerator enthaltende Verzögerungseinrichtung (18) zum Einstellen der zeitlichen Abstände zwischen aufeinanderfolgenden Anschalteversuchen vorgesehen ist.

## Revendications

1. Procédé pour la transmission d'informations binaires dans des créneaux temporels successifs d'une trame de multiplexage temporel dans un réseau de transmission optique comprenant un nombre défini de stations terminales et un central auquel est raccordé au moins une fibre optique; à partir de celle-ci, par l'intermédiaire d'au moins un séparateur de faisceau et d'autres fibres optiques, des connexions sont établies en une structure arborescente avec des raccords de stations terminales; chaque station terminale obtient alors une adresse, une synchronisation est effectuée pour les transmissions de la station terminale, qui est rigide en phase avec le central, en fonction du retard de signal entre la station terminale et le central, et le niveau d'émission de la station terminale est ajusté en fonction de l'affaiblissement sur lignes hertziennes entre la station terminale et le central. Par ailleurs, la trame comprend un nombre défini de créneaux temporels pour des informations transmises par ligne ainsi qu'un nombre défini de bits pour la commande et la synchronisation et, par ailleurs, un nombre défini de bits pour la communication par paquets, caractérisé par le fait que cette partie de paquets de la trame est libérée par une instruction de commande donnée par le central à toutes les stations terminales actives pour le déroulement d'une procédure d'activation et de configuration pour sa part déclenchée et contrôlée par une station terminale nouvellement raccordée (fenêtre de mesure), et par le fait qu'une station terminale nouvellement installée et non encore active, à laquelle aucune adresse et aucun créneau temporel n'ont été affectés, génère dans la fenêtre de mesure de manière aléatoire un mot clé se composant d'un nombre défini au préalable de bits, et le transmet au central, lequel renvoie la matrice binaire ainsi reçue aux stations terminales, ceci étant donné que la matrice binaire reçue est comparée dans la station terminale nouvellement installée avec la matrice binaire du mot clé transmis.

2. Procédé conformément à la revendication 1, caractérisé par le fait que la transmission du mot clé se fait à plusieurs reprises successives par la station terminale nouvellement raccordée avec des niveaux d'émission différents, ceci afin de déterminer un niveau d'émission minimal et, le cas échéant, un niveau d'émission maximal pour lequel, en cas de dépassement ou de sous-dépassement, le central renvoie une matrice binaire falsifiée, et par le fait qu'on ajuste alors dans la station terminale, pour le niveau d'émission futur, une valeur située entre les valeurs extrêmes ainsi déterminées.

3. Procédé conformément à la revendication 1 ou 2, caractérisé par le fait que, lors de la rétrotransmission par le central d'une matrice binaire falsifiée, la (les) station(s) terminale(s) qui procède (procèdent) à la tentative d'activation fasse (fassent) une pause dont la durée correspond à une valeur aléatoire générée dans la station terminale et située au sein de valeurs limites définies au préalable, et/ou s'accroît proportionnellement au nombre de tentatives manquées, et par le fait que, de préférence après un nombre défini de tentatives manquées, le niveau d'émission de la station terminale est augmenté jusqu'à la valeur suivante.

4. Procédé conformément à la revendication 2 ou 3, caractérisé par le fait que, dans la station terminale nouvellement installée, qui dispose toute seule de la fenêtre de mesure et fonctionne avec le niveau d'émission optimisé, le retard de signal soit déterminé à partir du temps de retard entre l'émission du mot clé et la réception du mot clé rétrotransmis par le central sur la ligne de transmission optique, ce qui permet d'ajuster correctement le temps de retard de l'émetteur de la station terminale en question.

5. Procédé conformément à l'une des revendications 1 à 4, caractérisé par le fait que, en cas de constatation dans la station terminale de la conformité de la matrice binaire rétrotransmise par le central avec la matrice binaire initialement transmise par la station terminale, cette dernière détermine un créneau temporel, de préférence le créneau temporel libre le plus proche, et l'occupe dans le sens d'émission vers le central par injection d'une autre matrice binaire à laquelle ce créneau temporel est affecté.

6. Procédé conformément à l'une des revendications 1 à 5, caractérisé par le fait que, pour permettre une configuration, le canal de paquets est libéré par le central à des intervalles réguliers, par exemple toutes les 10 s.

7. Procédé conformément à l'une des revendications 1 à 6, caractérisé par le fait que, pour permettre la poursuite des paramètres de transmission par le central à des intervalles réguliers, par exemple une fois par heure, une autre station terminale est invitée à procéder de nouveau à l'optimisation du niveau d'émission et à la détermination du temps de retard, pendant que toutes les autres stations terminales doivent maintenir libre le canal de paquets (fenêtre d'ajustage).

8. Réseau de transmission optique comportant un nombre défini de stations terminales et un central auquel est raccordé au moins une fibre optique à partir duquel, par l'intermédiaire d'un séparateur de faisceau au moins et d'autres fibres optiques en une structure arborescente, des connexions sont prévues pour le raccordement des stations terminales, chaque station étant équipée d'un émetteur et d'un récepteur pour les signaux optiques binaires, et le niveau d'émission des stations terminales étant ajustable, caractérisé par le fait que, pour la réalisation d'une procédure d'activation et de configuration décentralisée, chaque station terminale (4, 5, 6, 7) comprend un générateur aléatoire (16) pour la génération d'un mot clé destiné à être transmis au central (8) au cours de la phase de configuration et un comparateur (15) pour la comparaison de la matrice binaire du mot clé rétrotransmis par le central (8) à la station terminale (4, 5, 6, 7), après réception dudit mot clé par le central, avec le mot clé initialement transmis par la station terminale, ainsi qu'un circuit logique (17) qui provoque une nouvelle tentative à la réception d'un mot clé falsifié, et également caractérisé par le fait que la station terminale (4, 5, 6, 7) est équipée d'un dispositif de chronométrage (14) pour la mesure du temps de retard entre l'émission du mot clé et la réception du mot clé rétrotransmis par le central (8), et pour l'ajustage du temps de retard de l'émetteur (12) de la station terminale en question.

9. Réseau de transmission conformément à la revendication 8, caractérisé par le fait que, dans la station terminale (4, 5, 6, 7), un dispositif de retardement (18) comprenant de préférence un générateur aléatoire est prévu pour l'ajustage des intervalles de temps entre les tentatives successives d'activation.

## Claims

1. Method for transmitting binary information in consecutive time slots of a time-division multiplex frame format in an optical transmission network having a number of terminal stations and a central station to which at least one optical waveguide is connected, proceeding from which links are provided to connections for the terminal stations via at least one beam divider and further optical waveguides in a tree-like structure, every terminal station being allocated an address, a synchronization for the transmission operation of the terminal station coupled in a phase-locked manner to the central station being carried out as a function of the signal delay time between terminal station and central station and the transmission level of the terminal station being adjusted as a function of the path attenuation between terminal station and central station, and the frame format comprising a number of time slots for circuit-switched information and a number of bits for control purposes and synchronization purposes and, in addition, a number of bits for packet-oriented communication, characterized in that this packet section of the frame is made free by a command transmitted from the central station to all the active terminal stations for carrying out a connection and configuration procedure, initiated and controlled by a newly connected terminal station, for terminal stations to be newly installed (measurement window) and in that a station keyword comprising a predetermined number of bits is generated an random value by a newly connected terminal station which is still not active and to which no address and no time slot has been allotted and said keyword is transmitted to the central station, which sends back the received bit pattern to the terminal stations, the bit pattern received being compared in the newly connected terminal station with the bit pattern of the transmitted station keyword.

2. Method according to claim 1, characterized in that the station keyword is transmitted by the newly connected terminal station consecutively at different transmission levels in order to determine a minimum and, optionally, a maximum transmission level at which if it is not reached or if it is exceeded, a falsified bit pattern is sent back by the central station and in that a value situated between the extreme values determined is set in the terminal station for the future transmission level.

3. Method according to Claim 1 or 2, characterized in that, if a falsified bit pattern is sent back by the central station, the terminal station(s) carrying out the connection attempt inserts (insert) a pause whose duration has a random value generated in the terminal station and situated within specified limits and/or increases with the number of failed attempts, and in that, preferably after a specified number of failed attempts, the transmission level of the terminal station is increased to the next higher value.

4. Method according to Claim 2 or 3, characterized in that, in the newly connected terminal station, which has only the measurement window at its disposal and operates with optimized transmission level, the signal delay time over the optical transmission paths is determined from the time delay between the transmission of the station keyword and the reception of the station keyword sent back by the central station and derives therefrom the necessary adjustment of the time delay of its own transmitter.

5. Method according to one of Claims 1 to 4, characterized in that, if the identity of the bit pattern sent back by the central station with the bit pattern transmitted by the newly connected terminal station is established in the terminal station, the latter determines a free time slot, preferably the next free time slot, and seizes the latter by feeding in another bit pattern in the transmission direction of the central station, which bit pattern identifies it as assigned.

6. Method according to one of Claims 1 to 5, characterized in that, to make possible a configuration method, the packet channel is made free by the central station at regular time intervals, for example every 10 s.

7. Method according to one of Claims 1 to 6, characterized in that to make possible tracking of the transmission parameters, another terminal station is requested in each case at regular intervals, for example every hour, by the central station to carry out again the optimization of the transmission level and the determination of the time delay while all the other terminal stations keep the packet channel free (adjustment window).

8. Optical transmission network having a number of terminal stations and a central station to which at least one optical waveguide is connected, proceeding from which links are provided to connections for the terminal stations via at least one beam divider and further optical waveguides in a tree-like structure, each station being equipped with a transmitter and a receiver for optical binary signals and the transmission level of the terminal stations being adjustable, characterized in that, to carry out a decentralized connection and configuration procedure, every end station (4, 5, 6, 7) contains a random generator (16) for generating a station keyword, which is to be transmitted in a configuration phase to the central station (8), and a comparator (15) for comparing the bit pattern, sent back by the central station (8) after reception of the transmission of the terminal station (4, 5, 6, 7) to the latter, of the station keyword with the transmitted station keyword, and also a logic circuit (17) which, on reception of a falsified station keyword, effects a repetition of the attempt, and in that, in the terminal station (4, 5, 6, 7), a time measuring device (14) is provided for measuring the time delay between the transmission of the station keyword and the reception of the station keyword sent back by the central station (8) and for adjusting the time delay of its own transmitter (12).

9. Transmission network according to Claim 8, characterized in that, in the terminal station (4, 5, 6, 7), a delay device (18) preferably containing a random generator is provided for adjusting the time intervals between consecutive connection attempts.
